# EUROPÄISCHE PATENTSCHRIFT

(11) **EP 2 368 427 B1**
(45) Veröffentlichungstag und Bekanntmachung des Hinweises auf die Patenterteilung: **15.07.2015**
(21) Anmeldenummer: 10009590.0
(22) Anmeldetag: 14.09.2010
(51) Int. Cl.: A01K 39/00, A01K 39/04

(54) **Fütterungsanlage**
Feeding assembly
Installation d'alimentation

(30) Priorität: 24.03.2010 DE 202010004171 U
(43) Veröffentlichungstag der Anmeldung: 28.09.2011
(73) Patentinhaber: H. Kolmans GbR Hermann Josef Kolmans, 47608 Geldern (DE)
(72) Erfinder: Kolmans, Hermann, Josef, 47625 Kevelaer-Wetten (DE)
(74) Vertreter: Angerhausen, Christoph

(56) Entgegenhaltungen:
- EP-A1- 1 355 527
- FR-A- 1 225 218
- GB-A- 890 135

## Beschreibung

Die Erfindung betrifft eine Fütterungsanlage für einen Geflügelstall mit mindestens einer Dachschräge, wobei die Fütterungsanlage mindestens eine Fütterungsvorrichtung umfasst, die eine Tränke aufweist und in einem vorgebbaren Abstand zu einem Stallboden bewegbar ist.

Gattungsgemäße Fütterungsanlagen zeichnen sich somit gerade dadurch aus, dass die Fütterungsvorrichtungen, aus denen die Tiere fressen und saufen, über weite Bereiche des Stallbodens bewegt werden können. Da das Geflügel vor allem während des Fressens und Saufens kotet, wird durch die Verwendung beweglicher Fütterungsvorrichtungen eine übermäßige Anhäufung von Tierexkrementen und Feuchtigkeit nahe der vormals ortsfesten Futterstellen vermieden. Da insbesondere Wassergeflügel beim Saufen dazu neigt, das bereitgestellte Tränkenwasser für die Gefiederpflege zu verwenden und damit die Einstreu nahe der Tränken zu befeuchten, ist es von besonderer Wichtigkeit, dass die Tränken der verwendeten Fütterungsvorrichtungen regelmäßig bewegt werden, um somit eine übermäßige lokale Befeuchtung der Einstreu zu vermeiden.

Gattungsgemäße Vorrichtungen haben daher den Vorteil, dass die Stallfläche für die Aufnahme von verspritztem Tränkenwasser sowie der Tierexkremente besser ausgenutzt und damit eine lokale Überbeanspruchung der Einstreu vermieden wird. Daraus folgt unmittelbar ein geringerer Stallpflegeaufwand, da die Einstreu weniger häufig ergänzt werden muss. Fütterungsanlagen mit beweglichen Fütterungsvorrichtungen haben darüber hinaus einen positiven Einfluss auf das Stallklima, was insbesondere durch die verringerte Ammoniakbildung zu erklären ist. Es hat sich darüber hinaus herausgestellt, dass in Geflügelställen mit beweglichen Fütterungsvorrichtungen die Tiere weniger häufig an Entzündungen leiden. Insbesondere konnte die Häufigkeit der für die Geflügelzucht besonders bedrohlichen Pododermatitis gesenkt werden.

Aus der EP 1 355 527 B1 ist eine gattungsgemäße Fütterungsanlage für einen Geflügelstall bekannt, bei der die Fütterungsvorrichtungen in horizontaler Richtung beweglich ausgebildet sind. Die vorgeschlagene Lösung sieht jedoch die Verwendung einer Vielzahl technisch komplexer Mittel vor und ist darüber hinaus nicht geeignet, unmittelbar an der Dachschräge gewöhnlicher Geflügelställe befestigt zu werden. Vielmehr ist es notwendig, dass die Fütterungsvorrichtungen entlang gekreuzter horizontal verlaufender Zahnstangen mit Hilfe mehrer Stellmotoren bewegt werden. Eine ähnliche Fütterungsanlage ist auch aus der der FR 1 225 218 A bekannt. Eine weitere Fütterungsanlage beschreibt die GB 890 135 A.

Es ist somit die Aufgabe der Erfindung, eine Fütterungsanlage mit einer bewegbaren Fütterungsvorrichtung für einen Geflügelstall vorzuschlagen, die sich ausschließlich technisch einfacher und damit preiswerter Mittel bedient und darüber hinaus geeignet ist, unmittelbar an der Dachschräge eines Geflügelstalls befestigt zu werden. Vorzugsweise sollte die vorzuschlagende Fütterungsanlage sich gerade die Dachschrägen gewöhnlicher Geflügelställe zunutze machen.

Diese Aufgabe wird erfindungsgemäß von einer Fütterungsanlage gemäß dem Schutzanspruch 1 gelöst. Vorteilhafte Ausführungsformen der Erfindung sind Gegenstand der abhängigen Ansprüche.

Eine erfindungsgemäße Fütterungsanlage soll sich gerade dadurch auszeichnen, dass sie eine erste und zumindest eine zweite drehantreibbare Achse und mindestens eine an der Dachschräge befestigte Führungsschiene aufweist, entlang welcher ein Schlitten auf einer schiefen Ebene auf und ab bewegbar ist, wobei die zweite drehantreibbare Achse an dem Schlitten befestigt und darauf ausgelegt ist, die Fütterungsvorrichtung auf dem vorgebbaren Abstand in Abhängigkeit der Position des Schlittens auf der Schiene zu halten, wozu die Fütterungsvorrichtung mit einem ersten Seil verbunden ist, das über die zweite drehantreibbare Achse aufwickelbar ist, und wobei der Schlitten mit einem ersten Ende eines zweiten Seils verbunden und das zweite Seil über die erste drehantreibbare Achse aufwickelbar ist, sodass so dass der Schlitten an jeder Position der Führungsschiene eine Hangabtriebskraft in Folge einer auf ihn einwirkenden Schwerkraft erfährt, wobei die Bewegung des Schlittens in Folge der Hangabtriebskraft entlang der Führungsschiene dadurch begrenzt ist, dass der Schlitten mit dem ersten Ende des zweiten Seils verbunden ist..

Es ist somit vorgesehen, dass die Führungsschiene der Fütterungsanlage unmittelbar an der Dachkonstruktion eines Geflügelstalls befestigt wird. Im einfachsten Fall kann die Führungsschiene ein U-Profil sein, welches an seinen freien Profilenden in Längsrichtung jeweils eine Abkantung aufweist, welche von einer entsprechenden Abkantung des verwendeten Schlittens hintergriffen wird, um einen Formschluss zwischen der Führungsschiene und dem Schlitten zu bilden. Auf diese technisch einfache Weise kann bereits gewährleistet werden, dass der Schlitten allein in Richtung entlang der Führungsschiene bewegbar ist.

Es ist des weiteren vorgesehen, dass die Führungsschiene gerade derart an der Dachschräge befestigt ist, dass sie für den Schlitten die Bewegung entlang einer schiefen Ebene ermöglicht. Auf diese Weise kann gewährleistet werden, dass der Schlitten an jeder Position der Führungsschiene eine Hangabtriebskraft in Folge einer auf ihn einwirkenden Schwerkraft erfährt.

Erfindungsgemäß ist vorgesehen, dass die Bewegung des Schlittens infolge der Hangabtriebskraft entlang der Führungsschiene dadurch begrenzt wird, dass der Schlitten mit dem ersten Ende eines zweiten Seils verbunden ist und das zweite Seil über die erste drehantreibbare Achse aufwickelbar ist. Es bedarf keiner eingehenden Erläuterung, dass die erste drehantreibbare Achse mit Bezug auf den Schlitten und die Führungsschiene gerade derart anzuordnen ist, dass mit dem Aufwickeln des zweiten Seils auf der ersten drehantreibbaren Achse eine Kraft auf den Schlitten ausgeübt wird, welche entgegen der Hangabtriebskraft wirkt und den Schlitten die schiefe Ebene und damit die Führungsschiene hinauf bewegt.

Abhängig davon, an welcher Position sich der Schlitten auf der Führungsschiene befindet, variiert auch der Abstand zwischen dem Schlitten und dem Hallenboden. Für erfindungsgemäße Fütterungsanlagen ist es jedoch gerade wesentlich, dass die Fütterungsvorrichtung stets einen vorgegebenen Abstand zum Hallenboden einnimmt. Um dies zu gewährleisten ist vorgesehen, dass die zweite drehantreibbare Achse an dem Schlitten befestigt ist und somit mit diesem eine Einheit bildet. Des weiteren ist die zweite drehantreibbare Achse gerade darauf ausgelegt, die Fütterungsvorrichtung auf dem vorgebbaren Abstand in Abhängigkeit der Position des Schlitten auf der Führungsschiene zu halten, indem die Fütterungsvorrichtung mit einem ersten Seil verbunden ist, das über die zweite drehantreibbare Achse aufwickelbar ist. Der Fachmann wird erkennen, dass in Kenntnis des Neigungswinkels der Dachschräge eine von dieser abhängende Synchronisierung der ersten und zweiten drehantreibbaren Achse genügen kann, um die Einhaltung des vorgegebenen Abstands der Fütterungsvorrichtung zum Hallenboden zu gewährleisten.

Es ist jedoch auch möglich, dass eine Ausführungsform der erfindungsgemäßen Fütterungsanlage eine Mess- und Steuereinheit aufweist, die darauf ausgelegt ist, kontinuierlich oder periodisch den Abstand zwischen der Fütterungsvorrichtung und dem Stallboden zu bestimmen und den Antrieb der zweiten drehantreibbaren Achse derart anzusteuern, dass der vorgegebene Abstand eingehalten wird. So kann beispielsweise ein Abstandsmessgerät an der Fütterungsvorrichtung vorgesehen sein, welches mit einer Ansteuereinheit für die zweite drehantreibbare Achse kommunikativ in Verbindung steht. Ebenso kann vorgesehen sein, dass die Höhe der Fütterungsvorrichtung über dem Stallboden mit Hilfe eines von der Fütterungsvorrichtung unabhängigen Messgerätes bestimmt wird.

Bei einer besonders bevorzugten Ausführungsform der Erfindung ist das zweite Ende des zweiten Seils mit einem weiteren Schlitten auf einer weiteren Führungsschiene verbunden, wobei die weitere Führungsschiene an einer der ersten Dachschrägen gegenüberliegenden zweiten Dachschräge befestigt und der weitere Schlitten entlang der weiteren Führungsschiene auf einer weiteren schiefen Ebene bewegbar ist. Dabei ist eine weitere zweite drehantreibbare Achse an dem weiteren Schlitten befestigt und darauf ausgelegt, eine weitere Fütterungsvorrichtung, welche mit einem weiteren ersten Seil, das über die weitere zweite-drehantreibbare Achse aufwickelbar ist, verbunden ist, auf dem vorgebbaren Abstand in Abhängigkeit der Position des weiteren Schlittens auf der weiteren Schiene zu halten.

Wenn in der vorliegenden Beschreibung davon die Rede ist, dass ein Seil über eine drehantreibbare Achse aufwickelbar ist, sollen sämtliche Mittel umfasst sein, die das Aufwickeln eines Seils oder dergleichen auf einem rotierenden Mittel ermöglichen. Insbesondere sollen sämtliche Arten von Spulen umfasst sein. Auch die definierten Seile sollen nicht auf bestimmte Seile beschränkt sein. Vielmehr soll der Fachmann sämtliche strangförmigen aufwickelbaren Mittel mit berücksichtigen. Es sollen auch Ketten umfasst sein. Bevorzugt sind Gurte, besonders bevorzugt sind Gurte aus gewebtem Nylon oder dergleichen, da diese kaum bis überhaupt nicht nachlängen.

Es ist ein wesentliches Merkmal der bevorzugten Ausführungsform, dass ein erster Schlitten an einer ersten Dachschräge mit dem ersten Ende des zweiten Seils und ein weiterer Schlitten auf einer der ersten Dachschräge gegenüberliegenden Dachschräge mit dem zweiten Ende des zweiten Seils verbunden ist. Daraus folgt stets, dass in Folge einer Rotation der ersten drehantreibbaren Achse stets beide mit dem Seil verbundenen Schlitten bewegt werden. Dabei kann es vorgesehen sein, dass die Seilabschnitte, welche der einen bzw. der anderen Dachschräge zugeordnet sind, auf einer gemeinsamen Spule oder auf unterschiedlichen Spulen aufgewickelt werden. So kann beispielsweise der Umfang einer ersten und einer zweiten Spule variieren, um für eine Kompensation eines eventuell bestehenden Längenunterschieds zwischen der ersten und der zweiten Führungsschiene zu sorgen. Es ist auch denkbar, dass das zweite Seil über zwei echte, nicht miteinander verbundene Teilstücke verfügt, die über die erste drehantreibbare Achse aufwickelbar sind. So kann es beispielsweise vorgesehen sein, dass die beiden echten Teilstücke unter Verwendung einer einzigen Aufwickelspule in unterschiedlichen Bereichen dieser aufgewickelt werden, um Systemstörungen vorzubeugen. Es ist jedoch auch möglich, dass die beiden echten Teilstücken des zweiten Seils über die erste drehantreibbare Achse auf zwei unterschiedlichen Spulen, insbesondere auf Spulen unterschiedlichen Umfangs, aufwickelbar sind.

Bei einer weiteren Ausführungsform der Erfindung sind die erste und die zweite Führungsschiene als eine einheitliche Führungsschiene ausgebildet, wobei die einheitliche Führungsschiene im Bereich eines die erste und die zweite Dachschräge verbindenden Giebels eine Richtungsänderung aufweist. Mit Hilfe der vorbenannten Ausführungsform, jedoch auch unabhängig davon, ist es möglich, mehrere Führungsschienen erfindungsgemäß an der Dachschräge bzw. den Dachschrägen eines Geflügelstalls parallel anzuordnen, wobei die jeweils auf den Führungsschienen bewegbar angeordneten Schlitten über eine entsprechende Anzahl zweiter Seile, die über eine gemeinsame erste drehantreibbare Achse, welche sich über eine entsprechende Länge des Dachgiebels erstreckt, aufwickelbar sind,angetrieben werden können. Bei dieser Ausführungsform der Erfindung ist es zweckmäßig, dass über die Länge der gemeinsamen ersten drehantreibbaren Achse eine entsprechende Anzahl Aufwickelspulen für die zweiten Seile oder echte Teilstücke dieser, verteilt sind.

Wie eingangs erwähnt, ist es zur Schonung der Einstreu insbesondere wichtig, dass die Tränken der Fütterungsvorrichtung in hohem Maße unstationär ausgeführt sind. Um den Tränken einer Ausführungsform der erfindungsgemäßen Fütterungsanlage zusätzlich zu der Bewegung der Fütterungsvorrichtung in Folge der Schlittenbewegung eine weitere Bewegungskomponente zuzuweisen, ist es vorgesehen, dass die Fütterungsvorrichtung parallel zu dem Stallboden rotierbar ist. Besonders bevorzugt ist dabei, dass die zumindest eine Tränke der Fütterungsvorrichtung über einen Ausleger von der Rotationsachse entfernt angeordnet und somit auf einem Kreisbogen bewegbar ist. Weist die Fütterungsvorrichtung zusätzlich zu der Tränke einen Futtertrog zur Bereitstellung von festem Futter auf, so kann es vorgesehen sein, dass der Futtertrog im Wesentlichen symmetrisch um die Rotationsachse der Fütterungsvorrichtung herum angeordnet ist und die Tränke über einen Ausleger von der Rotationsachse entfernt angeordnet und somit auf einem Kreisbogen bewegbar ist.

Eine besonders zweckmäßige Ausgestaltung der vorgenannten Ausführungsform sieht vor, dass zusätzlich zu der einen Tränke, welche über einen Ausleger angeordnet ist, eine weitere Tränke vorgesehen ist, die ebenfalls über einen Ausleger von der Rotationsachse entfernt angeordnet und somit auf einem Kreisbogen bewegbar ist. Dabei sollen die beiden Tränken in einem im Wesentlichen gleichen Abstand zu der Rotationsachse und mit dem Futtertrog auf einer gemeinsamen Geraden angeordnet sein.

Es ist zu erkennen, dass die vorliegende Erfindung ausschließlich die Verwendung einfacher technischer Mittel vorsieht und somit die kostengünstige Realisierung einer Fütterungsanlage für einen Geflügelstall, der mindestens eine Dachschräge aufweist, ermöglicht. Besonders vorteilhaft ist, dass sich die vorliegende Erfindung, abweichend von den aus dem Stand der Technik bekannten Lösungen, die Dachschräge gewöhnlicher Geflügelställe zunutze macht, und allein diese Nutzbarmachung der Dachschräge ermöglicht es, auf bidirektional wirkende Stellmittel, d. h. Stellmittel, die in zumindest zwei Stellrichtungen eine Stellkraft auf die Fütterungsvorrichtung ausüben, wie Zahnstangengetriebe, zu verzichten. Die Erfindung ist auf Flachdachställe übertragbar, indem die Schienen in geeigneter Weise geneigt von dem Flachdach abgehangen werden.

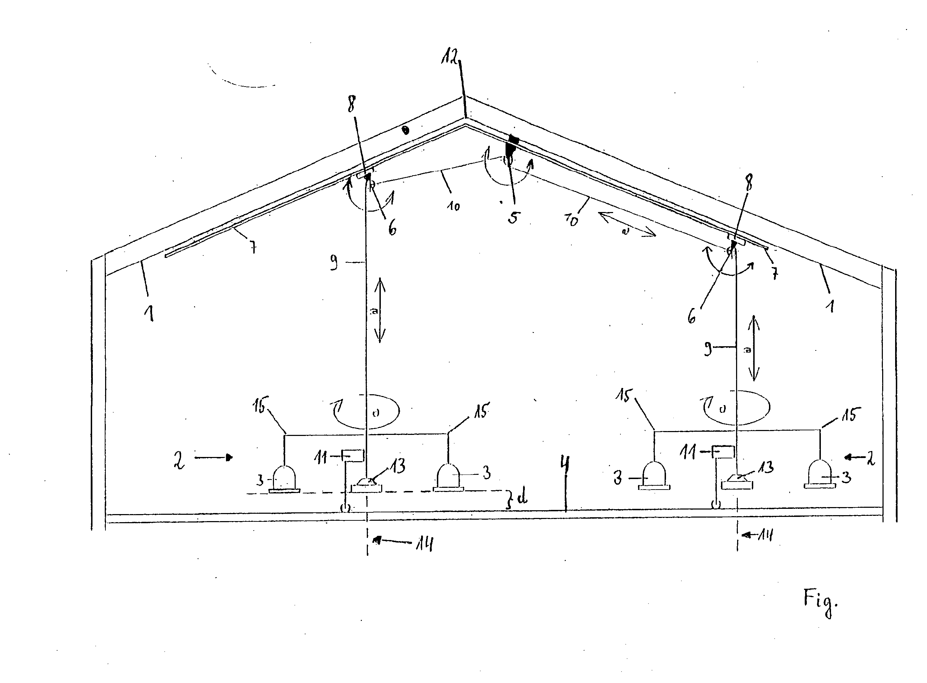

Eine beispielhafte Ausführungsform der Erfindung ist in der nachstehend beschriebenen Figur offenbart. Dabei zeigt die Figur eine Querschnittsansicht eines mit einer erfindungsgemäßen Fütterungsanlage ausgestatteten Geflügelstalls.

Die Figur zeigt eine erfindungsgemäße Fütterungsanlage, welche an einer Dachschräge 1 befestigt ist und im dargestellten Querschnitt genau zwei Fütterungsvorrichtungen 2 aufweist, die jeweils zwei Tränken 3 und einen Futtertrog 13 umfassen. Die Fütterungsvorrichtungen 2 befinden sich in einem vorgegebenen Abstand d zu dem Stallboden 4 und sind unter Beibehaltung des Abstands d über den Stallboden 4 bewegbar. Die Fütterungsanlage weist darüber hinaus eine erste drehantreibbare Achse 5 und zwei zweite drehantreibbare Achsen 6 auf. Dementsprechend sind auch zwei Führungsschienen 7 vorgesehen, welche an gegenüberliegenden Dachschrägen 1 befestigt sind. Entlang der beiden Führungsschienen 7 ist jeweils ein Schlitten 8 bewegbar angeordnet, wobei an jedem der Schlitten 8 jeweils eine zweite drehantreibbare Achse 6 befestigt ist. Die Fütterungsvorrichtungen 2 sind jeweils mit einem Seil 9 verbunden, das über die jeweilige zweite drehantreibbare Achse 2 aufwickelbar ist. Des Weiteren sind die beiden Schlitten 8 jeweils mit einem Ende eines zweiten Seils 10 verbunden, wobei das zweite Seil 10 über die erste drehantreibbare Achse 5 aufwickelbar ist. Eine Mess- und Steuereinheit 11 je Fütterungsvorrichtung 2 ist darauf ausgelegt, kontinuierlich oder periodisch den Abstand zwischen der Fütterungsvorrichtung 2 und dem Stallboden 4 zu bestimmen und den Antrieb der jeweiligen zweiten drehantreibbaren Achse 6 derart anzusteuern, dass der vorgegebene Abstand d eingehalten wird. Des Weiteren ist zu erkennen, dass in der dargestellten Ausführungsform eine einheitliche Führungsschiene 7 vorgesehen ist, die im Bereich eines die erste und die zweite Dachschräge 1 verbindenden Giebels 12 eine Richtungsänderung aufweist. Des Weiteren ist die Fütterungsvorrichtung 2 parallel zu dem Stallboden 4 rotierbar, wie es durch die Pfeile c) angedeutet ist. Die Pfeile b) verdeutlichen die vertikale Höhenregulierung in Folge der Rotation der zweiten drehantreibbaren Achsen 6. Schließlich ist bei der dargestellten Ausführungsform der jeweilige Futtertrog 13 der Fütterungsvorrichtung 2 im Wesentlichen symmetrisch um die Rotationsachsen 14 der Fütterungsvorrichtungen 2 herum angeordnet und die Tränken 3 sind jeweils über einen Ausleger 15 von den Rotationsachsen 14 entfernt angeordnet und somit auf einem Kreisbogen bewegbar. Dabei ist vorgesehen, dass die beiden Tränken 3 einer jeden Fütterungsvorrichtung 2 in einem im Wesentlichen gleichen Abstand zu der jeweiligen Rotationsachse 14 und mit dem Futtertrog 13 auf einer gemeinsamen Geraden angeordnet sind.

## Patentansprüche

1. Fütterungsanlage für einen Geflügelstall mit mindestens einer Dachschräge (1), mit mindestens einer Fütterungsvorrichtung (2), die eine Tränke (3) aufweist und in einem vorgebbaren Abstand zu einem Stallboden (4) bewegbar ist, **dadurch gekennzeichnet, dass** die Fütterungsanlage eine erste und zumindest eine zweite drehantreibbare Achse (5, 6) und mindestens eine an der Dachschräge (1) befestigte Führungsschiene (7) aufweist, entlang welcher ein Schlitten (8) auf einer schiefen Ebene auf und ab bewegbar ist, wobei die zweite drehantreibbare Achse (6) an dem Schlitten (8) befestigt und darauf ausgelegt ist, die Fütterungsvorrichtung (2) auf dem vorgebbaren Abstand in Abhängigkeit der Position des Schlittens (8) auf der Schiene (7) zu halten, wozu die Fütterungsvorrichtung (2) mit einem ersten Seil (9) verbunden ist, das über die zweite drehantreibbare Achse (6) aufwickelbar ist, und wobei der Schlitten (8) mit einem ersten Ende eines zweiten Seils (10) verbunden ist und das zweite Seil (10) über die erste drehantreibbare Achse (5) aufwickelbar ist, so dass der Schlitten (8) an jeder Position der Führungsschienen (7) eine Hangabtriebskraft in Folge einer auf ihn einwirkenden Schwerkraft erfährt, wobei die Bewegung des Schlittens (8) in Folge der Hangabtriebskraft entlang der Führungsschiene (7) dadurch begrenzt ist, dass der Schlitten (8) mit dem ersten Ende des zweiten Seils (10) verbunden ist.

2. Fütterungsanlage nach Anspruch 1, **dadurch gekennzeichnet, dass** das zweite Ende des zweiten Seils (10) mit einem weiteren Schlitten (8) auf einer weiteren Führungsschiene (7) verbunden ist, wobei die weitere Führungsschiene (7) an einer der ersten Dachschrägen (1) gegenüberliegenden zweiten Dachschräge (1) befestigt und der weitere Schlitten (8) entlang der weiteren Führungsschiene (7) auf einer weiteren schiefen Ebene bewegbar ist, und wobei eine weitere zweite drehantreibbare Achse (6) an dem weiteren Schlitten (8) befestigt und darauf ausgelegt ist, eine weitere Fütterungsvorrichtung (2), welche mit einem weiteren ersten Seil (9), das über die weitere zweite drehantreibbare Achse (6) aufwickelbar ist, verbunden ist, auf dem vorgebbaren Abstand in Abhängigkeit der Position des weiteren Schlittens (8) auf der weiteren Schiene (7) zuhalten.

3. Fütterungsanlage nach Anspruch 1 oder 2, **dadurch gekennzeichnet, dass** eine Mess- und Steuereinheit (11) darauf ausgelegt ist, kontinuierlich oder periodisch den Abstand zwischen der Fütterungsvorrichtung (2) und dem Stallboden (4) zu bestimmen und den Antrieb der zweiten drehantreibbaren Achse (6) derart anzusteuern, dass der vorgegebene Abstand eingehalten wird.

4. Fütterungsanlage nach Anspruch 2, **dadurch gekennzeichnet, dass** die erste und die zweite Führungsschiene (7) als eine einheitliche Führungsschiene (7) ausgebildet sind, die im Bereich eines die erste und die zweite Dachschräge (1) verbindenden Giebels (12) eine Richtungsänderung aufweist.

5. Fütterungsanlage nach einem der vorangegangenen Ansprüche, **dadurch gekennzeichnet, dass** die Fütterungsvorrichtung (2) parallel zu dem Stallboden (4) rotierbar ist.

6. Fütterungsanlage nach Anspruch 5, **dadurch gekennzeichnet, dass** die Fütterungsvorrichtung (2) zusätzlich zu der Tränke (3) einen Futtertrog (13) zur Bereitstellung von festem Futter aufweist, wobei der Futtertrog (13) im Wesentlichen symmetrisch um die Rotationsachse (14) der Fütterungsvorrichtung (2) herum angeordnet ist und die Tränke (3) über einen Ausleger (15) von der Rotationsachse (14) entfernt angeordnet und somit auf einem Kreisbogen bewegbar ist.

7. Fütterungsanlage nach Anspruch 6, **dadurch gekennzeichnet, dass** eine weitere Tränke (3) über einen weiteren Ausleger (15) von der Rotationsachse (14) entfernt angeordnet und somit auf einem Kreisbogen bewegbar ist, wobei die beiden Tränken (3) in einem im Wesentlichen gleichen Abstand zu der Rotationsachse (14) und mit dem Futtertrog (13) auf einer gemeinsamen Geraden angeordnet sind.

## Claims

1. A feeding assembly for a poultry coop with at least one roof slope (1), with at least one feeding device (2) that comprises a drinking trough (3) and can move at a settable distance to a coop floor (4), **characterized in that** the feeding assembly comprises a first and at least one second shaft (5, 6) that can be rotatably driven and at least one guide rail (7) fastened to the roof slope (1) along which rail a carriage (8) can be moved up and down on a tilted plane, wherein the second axle (6), that can be rotatably driven, is fastened on the carriage (8) and is designed to hold the feeding device (2) at the settable distance depending on the position of the carriage (8) on the rail, (7) to which end the feeding device (2) is connected to a first cable (9) that can be wound up by the by the shaft (6), that can be rotatably driven, and wherein the carriage (8) is connected to a first end of a second cable (10) and the second cable (10) can be wound up by the first shaft (5), that can be rotatably driven, so that the carriage (8) experiences a suspended output force at every position of the guide rail (7) as a consequence of gravity acting on it, wherein the movement of the carriage (8) is limited as a consequence of the suspended output force along the guide rail (7) **in that** the carriage (8) is connected to the first end of the second cable (10).

2. The feeding assembly according to Claim 1, **characterized in that** the second end of the second cable (10) is connected to another carriage (8) on another guide rail (7), wherein the other guide rail (7) is fastened to a second roof slope (1) opposite the first roof slope (1) and the other carriage (8) can be moved along the other guide rail (7) on another tilted plane, and wherein another second axle (6), that can be rotatably driven, is fastened on the second carriage (8) and is designed to hold another feeding device (2) that is connected to another first cable ( 9) that can be wound up by the other second axle (6), that can be rotatably driven, at the settable distance depending on the position of the other carriage (8) on the other rail (7).

3. The feeding assembly according to Claim 1 or 2, **characterized in that** a measuring and control unit (11) is designed to continuously or periodically determine the distance between the feeding device (2) and the coop floor (4) and to control the drive of the second shaft (6), that can be rotatably driven, in such a manner that the settable distance is maintained.

4. The feeding assembly according to Claim 2, **characterized in that** the first and the second guide rail (7) are constructed as a unified guide rail (7) that comprises a change of direction in the area of a gable (12) connecting the first and the second roof slope (1).

5. The feeding assembly according to one of the previous claims, **characterized in that** the feeding device (2) can rotate parallel to the coop floor (4).

6. The feeding assembly according to Claim 5, **characterized in that** the feeding device (2) comprises a feeding trough (13) in addition to the drinking trough (3) for making solid food available, wherein the feeding trough (13) is arranged substantially symmetrically around the axis of rotation (14) of the feeding device (2) and the drinking trough (3) is arranged remotely from the axis of rotation (14) by an arm (15) and can therefore be moved in a circular arc.

7. The feeding assembly according to Claim 6, **characterized in that** another drinking trough (3) is arranged remotely from the axis of rotation (14) by another arm (15) and can therefore be moved in a circular arc, wherein the two drinking troughs (3) are arranged at substantially the same distance from the axis of rotation (14) and in a straight line with the feeding trough (13).

## Revendications

1. Installation d'alimentation pour un poulailler avec au moins une toiture inclinée (1) avec au moins un dispositif d'alimentation (2), qui comprend un abreuvoir (3) et est mobile à une distance prédéterminée par rapport à un sol de poulailler (4), **caractérisée en ce que** l'installation d'alimentation comprend un premier et au moins un deuxième axe (5, 6) pouvant être entraîné en rotation et au moins un rail de guidage (7) fixé à la toiture inclinée (1), le long duquel un chariot (8) est mobile de haut en bas sur un plan incliné, le deuxième axe (6) pouvant être entraîné en rotation étant fixé sur le chariot (8) et étant conçu afin de maintenir le dispositif d'alimentation (2) à la distance prédéterminée en fonction de la position du chariot (8) sur le rail (7) auquel le dispositif d'alimentation (2) est relié avec un premier câble (9) pouvant être enroulé à l'aide du deuxième axe (6) pouvant être entraîné en rotation et le chariot (8) étant relié avec une première extrémité d'un deuxième câble (10) et le deuxième câble (10) pouvant être enroulé à l'aide du premier axe (5) pouvant être entraîné en rotation, de façon à ce que le chariot (8) subisse, à chaque position du rail de guidage (7), une force de sortie de suspension suite à une force de gravité s'exerçant sur lui, le mouvement du chariot (8) le long du rail de guidage (7) étant limité du fait de la force de sortie de suspension par le fait que le chariot (8) est relié à la première extrémité du deuxième câble (10).

2. Installation d'alimentation selon la revendication 1, **caractérisée en ce que** la deuxième extrémité du deuxième câble (10) est reliée avec un autre chariot (8) sur un autre rail de guidage (7), l'autre rail de guidage (7) étant fixé à une deuxième toiture inclinée (1) opposée à la première toiture inclinée (1) et l'autre chariot (8) étant mobile le long de l'autre rail de guidage (7) sur un autre plan incliné et un autre axe (6) pouvant être entraîné en rotation étant fixé sur l'autre chariot (8) et étant conçu pour maintenir un autre dispositif d'alimentation (2), relié avec un autre premier câble (9), qui peut être enroulé à l'aide de l'autre deuxième axe (6) pouvant être entraîné en rotation, à la distance prédéterminée en fonction de la position de l'autre chariot (8) sur l'autre rail (7).

3. Installation d'alimentation selon la revendication 1 ou 2, **caractérisée en ce qu'**une unité de mesure et de commande (11) est conçue pour déterminer en continu ou périodiquement la distance entre le dispositif d'alimentation (2) et le sol du poulailler (4) et de commander l'entraînement du deuxième axe (6) pouvant être entraîné en rotation de façon à ce que la distance prédéterminée soit respectée.

4. Installation d'alimentation selon la revendication 2, **caractérisée en ce que** le premier et le deuxième rail de guidage (7) sont conçus comme un rail de guidage (7) unique qui présente, au niveau d'un pignon (12) reliant la première et la deuxième toiture inclinée (1), un changement de direction.

5. Installation d'alimentation selon l'une des revendications précédentes, **caractérisée.en ce que** le dispositif d'alimentation (2) est rotatif parallèlement au sol du poulailler (4).

6. Installation d'alimentation selon la revendication 5, **caractérisée en ce que** le dispositif d'alimentation (2) comprend, en plus de l'abreuvoir (3), une auge (13) pour la mise à disposition d'aliments solides, l'auge (13) étant disposée de manière globalement symétrique autour de l'axe de rotation (14) du dispositif d'alimentation (2) et l'abreuvoir (3) étant éloigné de l'axe de rotation (14) à l'aide d'une flèche (15) et donc mobile sur un arc de cercle.

7. Installation d'alimentation selon la revendication 6, **caractérisée en ce qu'**un autre abreuvoir (3) est éloigné de l'axe de rotation (14) à l'aide d'une autre flèche (15) et est donc mobile sur un arc de cercle, les deux abreuvoirs (3) étant disposés globalement à la même distance par rapport à l'axe de rotation (14) et sur une droite commune avec l'auge (13).
